# EUROPEAN PATENT APPLICATION

(11) **EP 3 978 840 A1**
(43) Date of publication of application: **06.04.2022**
(21) Application number: 19931463.4
(22) Date of filing: 15.10.2019
(51) Int. Cl.: F25D 11/02

(54) **REFRIGERATOR AND MANUFACTURING METHOD THEREOF**

(30) Priority: 24.05.2019 CN 201910441496
(71) Applicant: Qingdao Haier Refrigerator Co., Ltd, Qingdao, Shandong 266101 (CN); Haier Smart Home Co., Ltd., Qingdao, Shandong 266101 (CN)
(72) Inventor: LIU, Zhanzhan, Qingdao, Shandong 266101 (CN); LI, Peng, Qingdao, Shandong 266101 (CN); ZHU, Xiaobing, Qingdao, Shandong 266101 (CN)
(74) Representative: Lavoix
(86) International application number: PCT/CN2019/111181
(87) International publication number: WO 2020/237968

(57) **Abstract**

The present invention discloses a refrigerator. The refrigerator comprises a housing and a refrigeration inner liner disposed in the housing, and the refrigerator further comprises a foaming layer disposed between the refrigeration inner liner and the housing; the refrigerator further comprises a conduit extending inward from an edge of the housing and buried in the foaming layer, the conduit comprises a rigid tube and a flexible tube that are connected to each other, an end of the rigid tube far away from the flexible tube is disposed close to the edge of the housing, and a strength of the flexible tube is lower than the strength of the rigid tube. Therefore, in the present invention, in the foaming process of the refrigerator, a foaming material may be discharged from the flexible tube and filled. Since the strength of the flexible tube is lower than the strength of the rigid tube, after the foaming material gradually increases, the foaming material presses the flexible tube so that the flexible tube is spaced apart a certain distance from the housing or the inner liner. After the refrigerator is formed and works, the flexible tube is completely buried in the foaming layer, so that the amount of cold that may be transferred is very limited, thereby preventing condensation from appearing at the position on the housing of the refrigerator corresponding to the conduit.

## Description

### TECHNICAL FIELD

The present invention relates to the field of refrigerators and manufacture thereof, and particularly to a refrigerator capable of preventing condensation on a back plate thereof, and a manufacturing method of the refrigerator.

### BACKGROUND

With the improvement of people's living standards, people have higher and higher requirements for refrigerators. To ensure the thermal insulation, traditional refrigerators usually employ a thick foaming layer which therefore occupies a large area, so that the useable volume in the refrigerators becomes smaller. Therefore, as the thermally insulating material further develops, the thermal insulation layer of the refrigerators further thins, and a super-thin and large-volume refrigerator emerges.

In the super-thin and large-volume refrigerator, the distance between the inner liner and the housing is narrow, which means a narrow space is left for the foaming layer. In order to ensure the foaming speed, a conduit for filling a foaming material must have a certain diameter. The conduit is usually located close to the back plate of the housing. However, as the foaming layer becomes narrower, the diameter of the conduit has approached the thickness of the thermal insulation layer on the back side of the inner liner. Generally, the material of the conduit is generally a plastic material, and its thermal conductivity coefficient is higher than that of the thermal insulation layer. Therefore, when the refrigerator works, the temperature of the inner liner is lower, and the back plate is in an external environment and therefore has a high temperature, so that the cold will be conducted from the conduit to the back plate. In a high-temperature and high-humidity environment, condensation is prone to appear at a position of the back plate corresponding to the conduit.

### SUMMARY

In order to solve the above problems, the present invention proposes a refrigerator. The refrigerator comprises a housing and a refrigeration inner liner disposed in the housing, and the refrigerator further comprises a foaming layer disposed between the refrigeration inner liner and the housing; the refrigerator further comprises a conduit extending inward from an edge of the housing and buried in the foaming layer, the conduit comprises a rigid tube and a flexible tube that are connected to each other, an end of the rigid tube far away from the flexible tube is disposed close to the edge of the housing, and a strength of the flexible tube is lower than the strength of the rigid tube.

As a further improvement of the present invention, the refrigeration inner liner comprises a refrigerating inner liner and a freezing inner liner, the foaming layer comprises a first foaming area arranged between the freezing inner liner and the housing, and a second foaming area arranged between the refrigerating inner liner and the housing, and the conduit extends inward from the edge of the housing close to the side of the freezing inner liner and is buried in the first foaming area.

As a further improvement of the present invention, a length of the rigid tube is 1/10 to 1/5 of the length of the flexible tube.

As a further improvement of the present invention, the rigid tube comprises a first body and an embedded portion extending from the first body; the flexible tube comprises a second body and an external connection portion extending from the second body, and an inner diameter of the external connection portion is larger than an outer diameter of the embedded portion such that at least part of the embedded portion may be sleeved inside the external connection portion.

As a further improvement of the present invention, the embedded portion extends from an edge of the first body in a direction away from the flexible tube to form a hook shape, and the external connection portion is sleeved on the embedded portion.

As a further improvement of the present invention, the conduit further comprises a connecting device which wraps around the external connection portion and the embedded portion in a state that the external connection portion is sleeved on the embedded portion.

As a further improvement of the present invention, a thickness of a wall of the rigid tube does not exceed 0.5 mm, and the thickness of a wall of the flexible tube is in a range of 50 um to 100 um.

To solve the above problems, the present provides a method of manufacturing a refrigerator, comprising: connecting a rigid tube with a flexible tube to form a conduit; extending the conduit between a housing of the refrigerator and a freezing inner liner; connecting an end of the rigid tube away from the flexible tube to an injection port; opening a material-filling gun to fill a foaming material into the conduit.

As a further improvement of the present invention, the step of "connecting a rigid tube with a flexible tube to form a conduit" comprises:

extending an edge of a first body of the rigid tube in a direction away from the flexible tube to form a hook-shaped embedded portion; sleeving an external connection portion of the flexible tube on the embedded portion.

As a further improvement of the present invention, the step of "connecting a rigid tube with a flexible tube to form a conduit" comprises: sleeving the flexible tube outside the rigid tube, so that the external connection portion of the flexible tube partially overlaps the embedded portion of the rigid tube; wrapping the external connection portion and the embedded portion with a connecting device.

Advantageous effects of the present invention are as follows: the conduit comprises the rigid tube and the flexible tube, and the flexible tube is more likely to deform than the rigid tube. Therefore, in the foaming process, the foaming material may be discharged from the flexible tube and filled in an initial process. Since the strength of the flexible tube is lower than the strength of the rigid tube, after the foaming material gradually increases, the foaming material presses the flexible tube so that the flexible tube is spaced apart a certain distance from the housing or the inner liner. After the refrigerator is formed and works, the flexible tube is completely buried in the foaming layer, so that the amount of cold that may be transferred is very limited, thereby preventing condensation from appearing at the position on the housing of the refrigerator corresponding to the conduit.

### BRIEF DESCRIPTION OF THE DRAWINGS

FIG. 1 is a structural schematic diagram of a refrigerator in the present invention;
FIG. 2 is an enlarged structural schematic diagram of a first embodiment of a circle portion of FIG. 1;
FIG. 3 is an enlarged structural schematic diagram of a second embodiment of the circle portion of FIG. 1.

### DETAILED DESCRIPTION

In order to enable those skilled in the art to better understand technical solutions of the present invention, the technical solutions in the embodiments of the present invention will be clearly and completely described below with reference to figures in the embodiments of the present invention. Obviously, the described embodiments are only partial embodiments of the present invention, rather than all the embodiments. Based on the embodiments of the present invention, all other embodiments obtained by those having ordinary skill in the art without making inventive efforts shall fall within the protection scope of the present invention.

In addition, references or numerals might be used repeatedly in different embodiments. Such repetitions are only intended to simply and clearly illustrate the present invention and not to mean there is any association between the discussed different embodiments or structures.

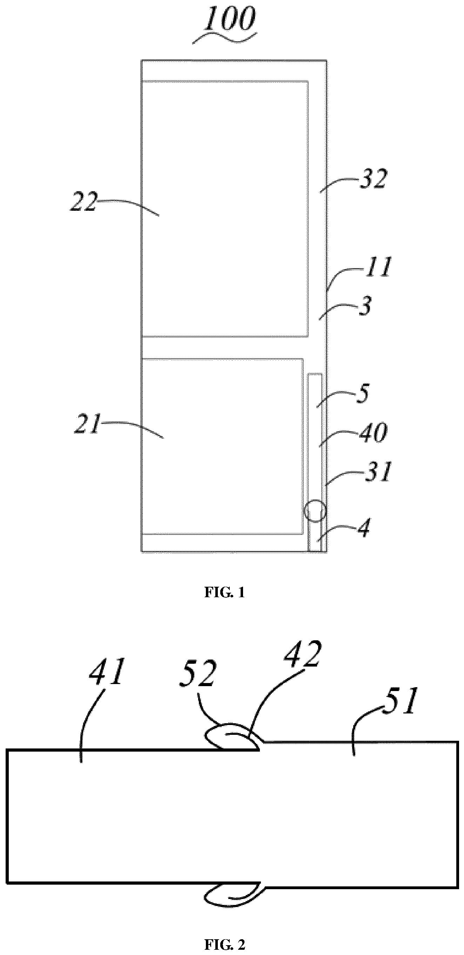

As shown in FIG. 1 through FIG. 3, the present invention provides a refrigerator 100. The refrigerator 100 comprises a housing and a refrigeration inner liner disposed in the housing. The refrigerator 100 further comprises a foaming layer 3 disposed between the refrigeration inner liner and the housing. The refrigerator 100 further comprises a conduit 40 extending inward from the edge of the housing and buried in the foaming layer 3. The conduit 40 comprises a rigid tube 4 and a flexible tube 5 that are connected to each other. An end of the rigid tube 4 far away from the flexible tube 5 is disposed close to the edge of the housing, and a strength of the flexible tube 5 is lower than the strength of the rigid tube 4.

Therefore, in the present invention, the conduit 40 comprises the rigid tube 4 and the flexible tube 5, the flexible tube 5 is more likely to deform than the rigid tube 4, and the end of the rigid tube 4 away from the flexible tube 5 is close to the edge of the housing so that the rigid tube 4 is served as an inlet of a foaming material and is connected to an injection port, and the flexible tube 5 further extends from the rigid tube 4 to the interior of the foaming layer 3. Therefore, in the foaming process, the foaming material may be discharged from the flexible tube 5 and filled in an initial process. Since the strength of the flexible tube 5 is lower than the strength of the rigid tube 4, after the foaming material gradually increases, the foaming material presses the flexible tube 5 so that the flexible tube 5 is spaced apart a certain distance from the housing or the inner liner. After the refrigerator 100 is formed and works, the flexible tube 5 is completely buried in the foaming layer 3, so that the amount of cold that may be transferred is very limited, thereby preventing condensation from appearing at the position on the housing of the refrigerator 100 corresponding to the conduit 40. Since the rigid tube 4 is relatively closer to the edge of the housing and needs to be connected to the injection port, the rigid tube 4 is required to be less deformable or non-deformable during foaming so that the strength of the rigid tube 4 is relatively large.

It needs to be appreciated that the rigidity and flexibility in the present invention only represent the difference in strength between the rigid tube 4 and the flexible tube 5. Mechanically, a capability of a material to resist against damages (deformation and fracture) under an external force is called strength. The rigid tube 4 is stronger and can produce less or no deformation after being pressed by the foaming material during the foaming process. The flexible tube 5 has lower strength and will produce greater deformation after being pressed by the foaming material so that the flexible tube 5 is spaced apart from the housing or the inner liner of the refrigerator 100.

The refrigeration inner liner comprises a refrigerating inner liner 22 and a freezing inner liner 21. The foaming layer 3 comprises a first foaming area 31 arranged between the freezing inner liner 21 and the housing, and a second foaming area 32 arranged between the refrigerating inner liner 22 and the housing. Since the freezing inner liner 21 usually needs to have a better thermal insulation condition, the second foaming area 32 between the freezing inner liner 21 and the housing is usually thicker than the first foaming area 31. Therefore, generally, the conduit 40 extends inward from the edge of the housing close to the side of the freezing inner liner 21 and is buried in the first foaming area 31.

Generally, the housing comprises a back plate 11, and the conduit 40 is disposed close to the back plate 11 and buried in the first foaming area 31 between the freezing inner liner 21 and the back plate 11. The freezing inner liner 21 is usually disposed below the refrigerating inner liner 22, so the injection port is also disposed at the bottom. In the material-filling process, the foaming material enters the conduit 40 from the injection port at the bottom of the refrigerator 100.

Furthermore, as mentioned above, the rigid tube 4 needs to be connected to the injection port, so it must have a high strength. In order to further improve the anti-condensation effect on the back plate 11, the length of the rigid tube 4 cannot be too long, so its length is at most 1/5 of the flexible tube 5; similarly, to enable the rigid tube 4 to be stably connected to the injection port, the length of the rigid tube 4 should not be too short, and it is at least 1/10 of the flexible tube 5. In order to fill a sufficient amount of uniform foaming material between the refrigeration inner liner and the housing, the entirety of the conduit 40 is usually only disposed between the freezing inner liner 21 and the back plate 11, that is, the conduit 40 usually does not extend to between the refrigerating inner liner 22 and the back plate 11.

Since the rigid tube 4 and the flexible tube 5 are made of different materials, they cannot be integrally formed. In the present embodiment, to enable stable connection between the rigid tube 4 and the flexible tube 5, the rigid tube 4 comprises a first body 41 and an embedded portion 42 extending from the first body 41. The flexible tube 5 comprises a second body 51 and an external connection portion 52 extending from the second body 51. An inner diameter of the external connection portion 52 is larger than an outer diameter of the embedded portion 42 such that at least part of the embedded portion 42 may be sleeved inside the external connection portion 52. Certainly, the inner diameter of the second body 51 may be the same as or slightly smaller than the inner diameter of the external connection portion 52. The first body 41 and the embedded portion 42 are integrally formed, and the second body 51 and the external connection portion 52 are also integrally formed.

Specifically, two specific embodiments are provided in the present invention.

In the first embodiment, as shown in FIG. 2, the embedded portion 42 extends from the edge of the first body 41 in a direction away from the flexible tube 5 to form a hook shape, and the external connection portion 52 is sleeved on the embedded portion 42. In the present embodiment, the embedded portion 42 is formed by flipping the edge of the first body 41, and the external connection portion 52 is directly sleeved on the embedded portion 42, so that the rigid tube 4 and the flexible tube 5 are connected to each other. In the present embodiment, since the embedded portion 42 forms a hook, no additional connecting device 6 is needed to connect the external connection portion 52 with the embedded portion 42. In addition, since the embedded portion 42 forms the hook, the embedded portion 42 is completely sleeved inside the external connection portion 52.

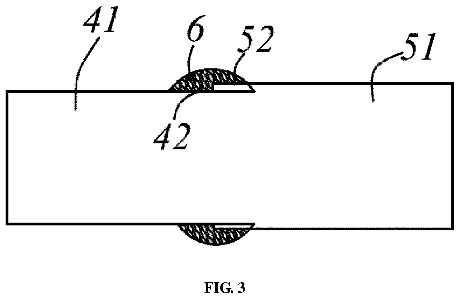

In the second embodiment, as shown in FIG. 3, the conduit 40 may further comprise a connecting device 6 which wraps around the external connection portion 52 and the embedded portion 42. In the present embodiment, the external connection portion 52 is directly sleeved outside the embedded portion 42, and then is wrapped by the connecting device 6 so that the external connection portion 52 and the embedded portion 42 are fixed to each other. In the present embodiment, since the connecting device 6 may be used for fixing, the embedded portion 42 may directly extend from the first body 41 towards the flexible tube 5 without forming the hook as in the first embodiment. Certainly, the object of the present invention may also be achieved by firing the external connection portion 52 with the embedded portion 42 by the hook as stated in the first embodiment or in other manners, then by wrapping the external connection portion 52 and the embedded portion 42 through the connecting device 6 to further improve the sealing performance between the rigid tube 4 and the flexible tube 5. In the present embodiment, the embedded portion 42 may be partially sleeved inside the external connection portion 52, or certainly may also be completely sleeved inside the external connection portion 52.

In addition, as stated above, the strength of the rigid tube 4 is greater than that of the flexible tube 5. In the present embodiment, the material of the rigid tube 4 is a plastic material with a large thickness, and the material of the flexible tube 5 is a plastic material with a small thickness. Specifically, the thickness of the wall of the rigid tube 4 does not exceed 0.5 mm, and the thickness of the wall of the flexible tube 5 is in a range of 50 um to 100 um.

The present invention further provides a manufacturing method of a refrigerator 100, comprising:
connecting a rigid tube 4 with a flexible tube 5 to form a conduit 40;
extending the conduit 40 between a housing of the refrigerator 100 and a freezing inner liner 21;
connecting an end of the rigid tube 4 away from the flexible tube 5 to an injection port;
opening a material-filling gun to fill a foaming material into the conduit 40.

The manufacturing method of the refrigerator 100 of the present invention only comprises a process before and after foaming. Specifically, as compared with the prior art, in the manufacturing method of the refrigerator 100 according to the present invention, the conduit 40 needs to be configured first, i.e., the rigid tube 4 and the flexible tube 5 are connected to form the conduit 40, and then a subsequent plastic foaming process is performed. In the foaming process, the foaming material will gradually press the conduit 40 and gradually compress the flexible tube 5 to prevent it from abutting against the back plate 11 of the housing and the freezing inner liner 21, the thermal conductivity at the flexible tube 5 in the foaming layer 3, and condensation may be further prevented from occurring on the back plate 11.

Moreover, as stated above, the present invention provides two ways to connect the rigid tube 4 with the flexible tube 5. Specifically, in the first embodiment, the step of "connecting the rigid tube 4 with the flexible tube 5 to form a conduit 40" comprises: extending the edge of the first body 41 of the rigid tube 4 in a direction away from the flexible tube 5 to form a hook-shaped embedded portion 42; sleeving an external connection portion 52 of the flexible tube 5 on the embedded portion 42. Alternatively, in the second embodiment, the step of "connecting the rigid tube 4 with the flexible tube 5 to form a conduit 40" comprises: sleeving the flexible tube 5 outside the rigid tube 4, so that an external connection portion 52 of the flexible tube 5 partially overlaps an embedded portion 42 of the rigid tube 4; wrapping the external connection portion 52 and the embedded portion 42 with a connecting device 6. Both of the above embodiments can achieve the purpose of the present invention.

Therefore, in summary, the present invention provides a refrigerator 100 and a manufacturing method thereof. According to the refrigerator 100 and the manufacturing method thereof, during the injection molding and foaming process, the flexible tube 5 is gradually pressed and flattened by the foaming material so that it will not directly contact the housing and the inner liner. In the actual operation process of the refrigerator 100, the flexible tube 5 is all buried in the foaming layer 3, and the thermal conductivity of the foaming layer 3 at the flexible tube 5 is lower, so no condensation will occur on the back plate 11 of the housing, thereby achieving the anti-condensation effect.

It should be understood that although the description is described according to the embodiments, not every embodiment only comprises one independent technical solution, that such a description manner is only for the sake of clarity, that those skilled in the art should take the description as an integral part, and that the technical solutions in the embodiments may be suitably combined to form other embodiments understandable by those skilled in the art.

The detailed descriptions set forth above are merely specific illustrations of feasible embodiments of the present invention, and are not intended to limit the scope of protection of the present invention. All equivalent embodiments or modifications that do not depart from the art spirit of the present invention should fall within the scope of protection of the present invention.

## Claims

1. A refrigerator, wherein the refrigerator comprises a housing and a refrigeration inner liner disposed in the housing, and the refrigerator further comprises a foaming layer disposed between the refrigeration inner liner and the housing; the refrigerator further comprises a conduit extending inward from an edge of the housing and buried in the foaming layer, the conduit comprises a rigid tube and a flexible tube that are connected to each other, an end of the rigid tube far away from the flexible tube is disposed close to the edge of the housing, and a strength of the flexible tube is lower than the strength of the rigid tube.

2. The refrigerator according to claim 1, wherein the refrigeration inner liner comprises a refrigerating inner liner and a freezing inner liner, the foaming layer comprises a first foaming area arranged between the freezing inner liner and the housing, and a second foaming area arranged between the refrigerating inner liner and the housing, and the conduit extends inward from the edge of the housing close to the side of the freezing inner liner and is buried in the first foaming area.

3. The refrigerator according to claim 1, wherein a length of the rigid tube is 1/10 to 1/5 of the length of the flexible tube.

4. The refrigerator according to claim 1, wherein the rigid tube comprises a first body and an embedded portion extending from the first body; the flexible tube comprises a second body and an external connection portion extending from the second body, and an inner diameter of the external connection portion is larger than an outer diameter of the embedded portion such that at least part of the embedded portion may be sleeved inside the external connection portion.

5. The refrigerator according to claim 4, wherein the embedded portion extends from an edge of the first body in a direction away from the flexible tube to form a hook shape, and the external connection portion is sleeved on the embedded portion.

6. The refrigerator according to claim 4 or 5, wherein the conduit further comprises a connecting device which wraps around the external connection portion and the embedded portion in a state that the external connection portion is sleeved on the embedded portion.

7. The refrigerator according to claim 1, wherein a thickness of a wall of the rigid tube does not exceed 0.5 mm, and a thickness of a wall of the flexible tube is in a range of 50 um to 100 um.

8. A method of manufacturing a refrigerator, wherein the method comprises:
connecting a rigid tube with a flexible tube to form a conduit;
extending the conduit between a housing of the refrigerator and a freezing inner liner;
connecting an end of the rigid tube away from the flexible tube to an injection port;
opening a material-filling gun to fill a foaming material into the conduit.

9. The manufacturing method according to claim 8, wherein the step of "connecting a rigid tube with a flexible tube to form a conduit" comprises:
extending an edge of a first body of the rigid tube in a direction away from the flexible tube to form a hook-shaped embedded portion;
sleeving an external connection portion of the flexible tube on the embedded portion.

10. The manufacturing method according to claim 8, wherein the step of "connecting a rigid tube with a flexible tube to form a conduit" comprises:
sleeving the flexible tube outside the rigid tube, so that an external connection portion of the flexible tube partially overlaps an embedded portion of the rigid tube;
wrapping the external connection portion and the embedded portion with a connecting device.
